# EUROPEAN PATENT SPECIFICATION

(11) **EP 2 105 363 B1**
(45) Date of publication and mention of the grant of the patent: **01.12.2010**
(21) Application number: 09004348.0
(22) Date of filing: 26.03.2009
(51) Int. Cl.: B60T 8/36, B60T 17/06, F15B 1/04

(54) **Vehicular brake hydraulic pressure control device**
Hydraulische Drucksteuerungsvorrichtung für Fahrzeugbremsen
Dispositif de commande de pression hydraulique pour frein de véhicule

(30) Priority: 27.03.2008 JP 2008082603
(43) Date of publication of application: 30.09.2009
(73) Proprietor: NISSIN KOGYO CO., LTD., Ueda-shi, Nagano (JP)
(72) Inventor: Kodama, Takuro c/o NISSIN KOGYO CO., LTD., Nagano (JP); Nakamura, Motoyasu c/o NISSIN KOGYO CO., LTD., Nagano (JP)
(74) Representative: HOFFMANN EITLE

(56) References cited:
- EP-A- 1 657 133
- JP-A- 2002 362 344

## Description

### BACKGROUND OF THE INVENTION

### Field of the Invention

The present invention relates to a vehicular brake hydraulic pressure control device.

### Description of Related Art

The vehicular brake hydraulic pressure control device according to the related art is for example one shown in Japanese Patent Examined Publication JP-B-3,676,264. This reservoir has a sealed opening end of a cylinder hole and utilizes gas spring action of a gas chamber to prevent foreign matters from invading therein. This arrangement allows downsizing of a helical compression spring and a reservoir main body.

However, the reservoir of vehicular brake hydraulic pressure control device described in the JP-B-3,676,264 accommodates a helical compression spring therein and requires its accommodation space.
EP 1 657 133 A discloses a vehicular brake hydraulic pressure control device also using a spring.

### SUMMARY OF THE INVENTION

From this point of view, an object of the invention is to provide a vehicular brake hydraulic pressure control device capable of reducing the size and the number of parts.

To solve the problems, according to the present invention, there is provided a vehicular brake hydraulic pressure control device, comprising: the features of claim 1.

According to the vehicular brake hydraulic pressure control device thus arranged, the volume of the hydraulic pressure chamber is changed by elastic deformation of the elastic member. This arrangement does not require the above described structure in which the volume of a hydraulic pressure chamber is changed by piston stroke and eliminates the need for a piston and a spring which require a large installation space. This downsizes the reservoir and accordingly, the cost of the vehicular brake hydraulic pressure control device is reduced through reduction in the number of parts of the reservoir.

Further, according to the present invention, it is adaptable that the elastic member and the plug repel each other by a magnetic force, and the repelling magnetic force constitutes a part of a force to return the elastic member to the original shape.

With the reservoir thus arranged, the repulsion by the magnetic force is used as part of a force to return the elastic member to a predetermined position. Thus, even if the elastic member has only a small restoring force, a proper clearance is always obtained between the plug and the elastic member.

Furthermore, according to the present invention, a breather hole for communicating the volume variable chamber to an exterior of the cylinder hole may be provided in the plug.

With the reservoir thus arranged, it is possible to make smooth and ease the elastic deformation of an elastic member thus facilitating the flow of brake fluid into a hydraulic pressure chamber.

According to the invention, it is possible to downsize the vehicular hydraulic pressure control device as well as to reduce the number of parts, thereby reducing the manufacturing cost of a vehicular brake hydraulic pressure control device.

### BRIEF DESCRIPTION OF THE DRAWINGS

Fig. 1 is an exploded perspective view of a vehicular brake hydraulic pressure control device according to the first embodiment of the invention;
Fig. 2A is a cross-sectional view of the vehicular brake hydraulic pressure control device according to the first embodiment of the invention showing the non-operational state of the reservoir;
Fig. 2B is a cross-sectional view of the reservoir of the vehicular brake hydraulic pressure control device according to the first embodiment of the invention showing the operational state of the reservoir;
Fig. 3A is a cross-sectional view of the reservoir of the vehicular brake hydraulic pressure control device according to the second embodiment of the invention showing the non-operational state of the reservoir; and
Fig. 3B is a cross-sectional view of the reservoir of the vehicular brake hydraulic pressure control device according to the second embodiment of the invention showing the operational state of the reservoir.

### DETAILED DESCRIPTION OF EXEMPLARY EMBODIMENTS OF THE PRESENT INVENTION

### <First Embodiment>

A first embodiment of the invention will be described with referring to accompanying drawings. A vehicular brake hydraulic pressure control device according to this embodiment is arranged, for example, on a motorcycle. Since the present invention relates to a structure of the reservoir in the vehicular brake hydraulic pressure control, the following description is mainly focused on the reservoir.

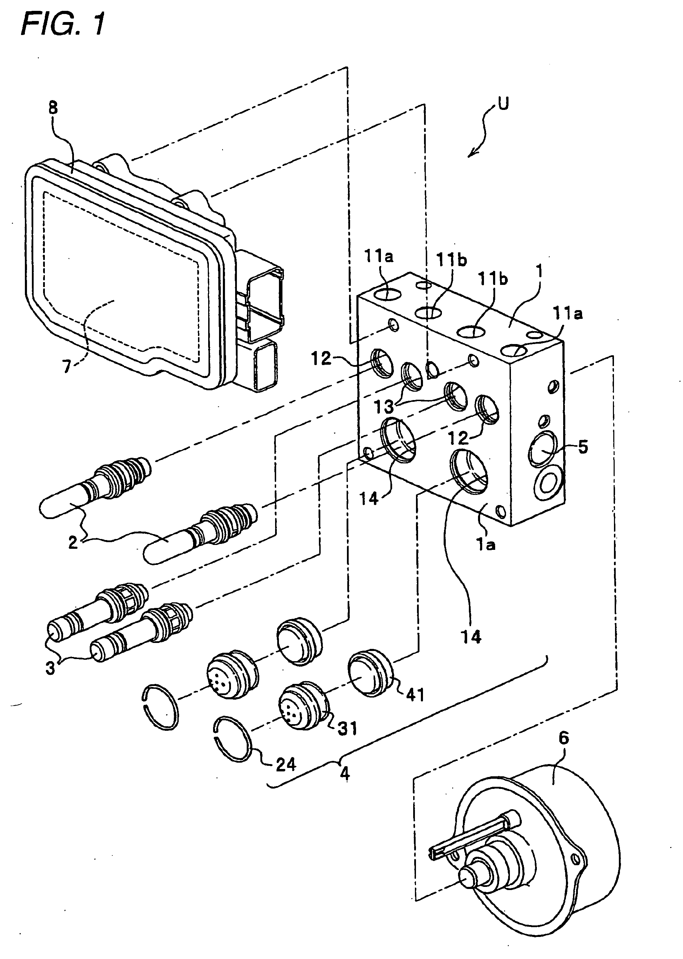

As shown in Fig. 1, the vehicular brake hydraulic pressure control device (hereinafter "control device") U includes a base 1, a normally-open electromagnetic valve 2, a normally-closed electromagnetic valve 3, a reservoir 4, a pump 5, a motor 6, an electronic control unit 7, and a control housing 8. The control housing 8 is assembled to a front surface 1a of the base 1 and accommodates the electronic control unit 7 therein. The motor 6 is assembled to a rear surface (not shown) of the base 1.

The base 1 is a member of an almost rectangular solid made of aluminum and includes a flow passage for brake fluid. The base 1 has a reservoir hole (hereinafter sometimes referred to as a "cylinder hole") 14 formed therein making a part of the reservoir 4 which has a bottomed portion at rear side and an opening which opens to a front surface 1a. The base 1 further includes: holes 12, 13 to which a normally-open electromagnetic valve 2 and a normally-closed electromagnetic valve 3 are attached; an inlet port 11a to which piping (not shown) leading to a master cylinder (not shown) is connected; and an outlet port 11b to which piping (not shown) leading to a wheel brake (not shown) is connected. The inlet port 11a, outlet port 11b, and holes 12, 13, 14 are communicated to each other either directly or via a flow passage (not shown) formed in the base 1.

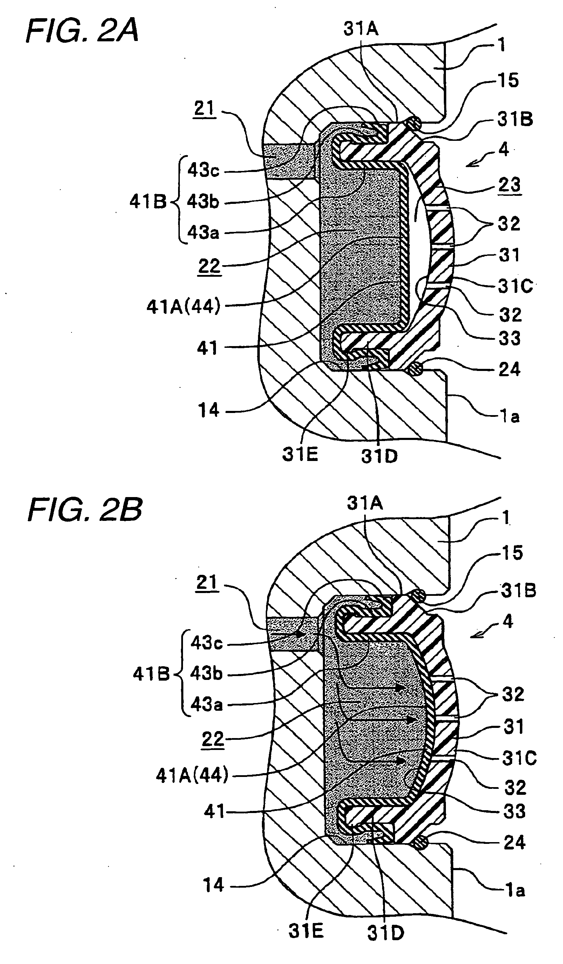

When the control device U executes pressure decreasing control by opening the normally-closed electromagnetic valve 3 to communicate the outlet port 11b with a communication passage 21 (refer to Fig.2), the brake fluid is flowed from a wheel cylinder side (not shown) and the reservoir 4 temporally stores the brake fluid flowed through the communication passage 21.

As shown in Fig. 2A, the reservoir 4 according to the first embodiment includes:
a bottomed cylinder hole (reservoir hole) 14 formed in the base 1, having a bottom side (bottom portion in this embodiment) to which the communication passage 21 is opened and an opening at the other end;
a plug 31 provided at the opening-side end of the cylinder hole 14;
an elastic member 41 provided in the cylinder hole 14 and partitioning an interior of the cylinder hole 14 into a hydraulic pressure chamber 22 on the side of the communication passage 21 and a volume variable chamber 23 on the side of the plug 31 in a hermetic manner; and
a C-shaped clip member 24 which fixes the plug 31 in the cylinder hole 14.
The bottom side of the cylinder hole 14 includes the bottom part and a side surface near the bottom part. While the communication passage 21 formed to open to the bottom part of the cylinder hole 14 in this embodiment, the invention is not limited thereto but may be formed to open to the side surface near the bottom part.

The cylinder hole 14 is a bottomed cylindrical hole formed in the base 1 and open to the front surface 1a. The communication passage 21 is opened and communicated to the bottom part of the cylinder hole 14 so as to allow brake fluid to flow into/out of the cylinder hole 14. An annular groove 15 for accommodating the clip member 24 is formed on an inner peripheral surface of the cylinder hole 14. The annular groove 15 has a semi-circular cross section and has a depth almost half the thickness of the clip member 24. When the clip member 24 is accommodated in the annular groove 15, the central half of the clip member 24 protrudes inward from the inner peripheral surface of the cylinder hole 14.

The plug 31 is formed by a synthetic resin and has the shape of a bottomed cylindrical lid. Its opening-side end is inserted into the innermost portion of the cylinder hole 14. The plug 31 has a maximum outer diameter part 31A which fits into the area of the cylinder hole 14 where the volume variable chamber 23 is formed. From the maximum outer diameter part 31A to the bottom side thereof, the plug 31 further has a tapered part 31B of which diameter is gradually decreasing. With the plug 31 inserted into the cylinder hole 14, the clip member 24 is inserted between the tapered part 31B and the inner peripheral surface of the cylinder hole 14 and accommodated into the annular groove 15 and locked thereto. The plug 31 is locked to the clip member 24 and fixed inside the cylinder hole 14. To be more precise, the central half of the clip member 24 protruding from the inner peripheral surface of the cylinder hole 14 abuts against the tapered part 31B of the plug 31 to regulate fall-off of the plug 31 when the clip member 24 of a circular cross section is accommodated into the annular groove 15 formed on the inner peripheral surface of the cylinder hole 14.

In the bottom part 31C of the plug 31, breather holes 32 communicating the volume variable chamber 23 to the exterior of the cylinder hole 14 are formed. A plurality of breather holes 32 are provided, each formed while penetrating the plug from inside and outside, in the center of the bottom part 31C and on concentric circles predetermined distances away from the center (refer to Fig. 1).

On the outer periphery of an opening-side end of the plug 31, there is formed a diameter reducing part 31D of which diameter is gradually decreasing. A peripheral edge of the elastic member 41 is accommodated in a ring-shaped space formed between the outer peripheral surface of the diameter reducing part 31D and the inner peripheral surface of the cylinder hole 14. On the outer peripheral surface of the tip (opening-side end) of the diameter reducing part 31D, a flange part 31E extending toward the outer circumference is formed so as to enhance the engagement with a cylindrical part 41B (described later) of the elastic member 41.

The elastic member 41 is formed of a deformable member such as rubber. The elastic member 41 has a bottomed cylindrical shape including a bottom part 41A positioned on the side of the plug 31 and a cylindrical part 41B positioned on the bottom side of the cylinder hole 14. The bottom part 41A also makes a diaphragm part 44 thereof. The diaphragm part 44 partitions, in a sealed manner, the interior of the cylinder hole 14 into a hydraulic pressure chamber 22 capable of storing brake fluid and a volume variable chamber 23 to which an atmospheric pressure is introduced. The diaphragm part 44 moves (is elastically deformed) with increase/decrease in the brake fluid stored in the hydraulic pressure chamber 22 to change the volume of the hydraulic pressure chamber 22. The diaphragm part 44 is arranged in a predetermined position (refer to Fig. 2A) when no pressure is being applied to the brake fluid in the hydraulic pressure chamber 22. When the brake fluid has flowed into the hydraulic pressure chamber 22 and a pressure is applied therein, then, the diaphragm part 44 moves toward the plug 31 and is deformed in a spherical crown shape (refer to Fig. 2B).

Concretely, as shown in Fig. 2B, when the diaphragm part 44 of the elastic member 41 is elastically deformed toward the plug 31, the elastic member 41 abuts against the inner surface of the bottom part 31C of the plug 31 and its deformation is regulated. That is, the inner surface of the bottom part 31C functions as a surface 33 for regulating deformation of the diaphragm part 44. The diaphragm part 44 bulges toward the plug 31 and abuts against its regulating surface 33 and is deformed in a curved spherical crown shape along the regulating surface 33.

As shown in Fig. 2A, the cylindrical part 41B includes an inner peripheral part 43a, a first folded part 43b folded toward the outer periphery from the inner peripheral part 43a and extending toward the opening-side end of the cylinder hole 14, and a second folded part 43c further folded toward the outer periphery from the end of the first folded part 43b and extending toward the bottom part of the cylinder hole 14. The inner peripheral part 43a and the first folded part 43b sandwich the diameter reducing part 31D of the plug 31. The first folded part 43b and second folded part 43c of the cylindrical part 41B of the elastic member 41 are accommodated between the outer peripheral surface of the diameter reducing part 31D of the plug 31 and the inner peripheral surface of the cylinder hole 14. The second folded part 43c is arranged so that its end (bottom part of the cylinder hole 14) is a predetermined spacing away from the first folded part 43b so that brake fluid flows into a space between the first folded part 43b and the second folded part 43c.

The effect of the elastic member 41 of the reservoir 4 of the above configuration will be described in the following explanation of the operation thereof.

When the electromagnetic valve 3 in direct communication to the outlet port 11b is open under control of decompression of a wheel brake such as anti-lock brake control, brake fluid is ready to flow into the hydraulic pressure chamber 22 from the communication passage 21 communicating to the flow passage in the base 1. At this time, the pressure is applied to the elastic member 41 by the brake fluid in the hydraulic pressure chamber 22 and the diaphragm part 44 is pressed and moves (is deformed) toward the plug 31. This allows brake fluid to flow into the hydraulic pressure chamber 22 and stores brake fluid corresponding to the volume of the thus moved diaphragm part 44.

Breather holes 32 are formed in the bottom part 31C of the plug 31, and thus, the pressure in the volume variable chamber 23 is maintained at the same pressure (atmospheric pressure) outside the cylinder hole. This smoothes and facilitates elastic deformation of the diaphragm part 44 of the elastic member 41 to thereby facilitate flow of brake fluid into the hydraulic pressure chamber 22.

The brake fluid in the hydraulic pressure chamber 22 imparts certain pressure on the inner surface of the cylinder hole 14 facing the hydraulic pressure chamber 22 and the surface of the elastic member 41. The brake fluid also flows into the space between the first folded part 43b and the second folded part 43c and presses the second folded part 43c toward the outer circumferential direction. This presses the second folded part 43c against the inner peripheral surface of the cylinder hole 14 in intimate contact thus enhancing the sealing performance.

When executing an anti-lock brake control, the motor 6 is driven by the electronic control unit 7. When the motor 6 is driven, the pump 5 is operated accordingly and the brake fluid stored in the reservoir 4 flows through the communication passage 21 and is circulated to the flow passage in the base 1. The diaphragm part 44 of the elastic member 41 returns to a predetermined position with its restoring force. The volume of the hydraulic pressure chamber 22 is reduced to the original volume. The brake fluid that has flowed into the hydraulic pressure chamber 22 flows out of the hydraulic pressure chamber 22.

As described above, according to this embodiment, the volume of the hydraulic pressure chamber 22 is changed by elastic deformation of the diaphragm part 44 of the elastic member 41. This arrangement does not require a structure to change the volume of a hydraulic pressure chamber through piston stroke as in the related art and eliminates the need for a piston and a spring that require a large installation space as well as saves the axial length of the reservoir 4. Especially in this embodiment, the elastic member 41 is formed so that its cylindrical part 41B will cover the diameter reducing part 31D of the plug 31. The depth (axial length) of the cylinder hole 14 is very small and equal to at least the total of the axial length dimension of the plug 31, thickness dimension of the elastic member 41, and a predetermined clearance dimension capable of storing brake fluid. This downsizes the reservoir 4 and accordingly a vehicular brake hydraulic pressure control device as well as reduces the overall cost through reduction in the number of parts of a reservoir (such as omission of a piston or a coil spring).

### <Second Embodiment>

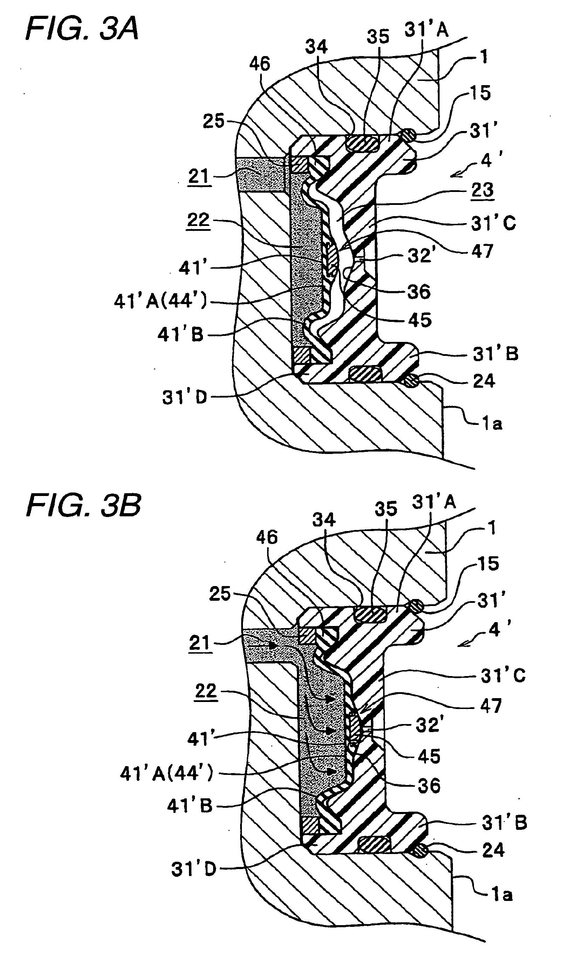

A second embodiment of the invention will be described with referring to accompanying drawings. As shown in Fig. 3A, a reservoir 4' according to the second embodiment includes: a bottomed cylinder hole (reservoir hole) 14 which is formed in the base 1 and has a bottom side (bottom in this embodiment) to which the communication passage 21 is opened and an opening at the other end; a plug 31' arranged at the opening-side end of the cylinder hole 14; an elastic member 41' arranged in the cylinder hole 14 and partitioning the interior of the cylinder hole 14 into a hydraulic pressure chamber 22 on the side of the communication passage 21 and a volume variable chamber 23 on the side of the plug 31' in a sealed manner; and a clip member 24 which fixes the plug 31' in the cylinder hole 14.

In this embodiment, the elastic member 41' and the plug 31' are designed to repel each other by a magnetic force and that the repulsion by the magnetic force is used as part of a force to return the elastic member 41' to its original shape.

Concretely, the elastic member 41' is formed of a deformable member such as rubber. The elastic member 41' has a bottomed cylindrical shape including a bottom part 41'A positioned on the side of the plug 31 and a cylindrical part 41'B positioned on the bottom side of the cylinder hole 14. The bottom part 41'A constitutes a diaphragm part 44'. The diaphragm part 44' partitions, in a sealed manner, the interior of the cylinder hole 14 into a hydraulic pressure chamber 22 and a volume variable chamber 23. The diaphragm part 44' moves (is elastically deformed) with an increase/decrease in the brake fluid stored in the hydraulic pressure chamber 22 to change the volume of the hydraulic pressure chamber 22. The diaphragm part 44' is arranged in a predetermined position (refer to Fig. 3A) when no pressure is being applied to the brake fluid in the hydraulic pressure chamber 22. When brake fluid has flowed into the hydraulic pressure chamber 22 and a pressure is applied therein, then, the diaphragm part 44' moves toward the plug 31' (refer to Fig. 3B). A permanent magnet 45 is arranged in the center of the diaphragm part 44' and on the surface of the diaphragm part 44' facing the plug 31'. An elastic member 41' is integrally embedded in a bulging part 47 bulging toward the plug 31'.

The peripheral edge 46 of the cylindrical part 41'B of the elastic member 41' is formed thick in a tongue shape so as to closely contact with the inner peripheral wall of the cylindrical part 31'D of the plug 31'. The peripheral edge 46 is fixed while sandwiched between a clip member 25 of a rectangular cross section inserted inside the cylindrical part 31'D of the plug 31' from the bottom part of the cylinder hole 14 and the plug 31'.

The plug 31' has the shape of a bottomed cylindrical lid. Its opening-side end is inserted into the innermost portion of the cylinder hole 14. The plug 31' has a maximum outer diameter part 31'A which fits into the area of the cylinder hole 14 where the volume variable chamber 23 is formed. From the maximum outer diameter part 31'A to the bottom-side end thereof, the plug 31 further has a tapered part 31'B of which diameter is gradually decreasing. With the plug 31' inserted into the cylinder hole 14, the clip member 24 is inserted between the tapered part 31'B and the inner peripheral surface of the cylinder hole 14 and accommodated into the annular groove 15 and locked thereto. The plug 31' is locked to the clip member 24 and fixed inside the cylinder hole 14. An annular groove 34 into which a ring-shaped seal member 35 is inserted is formed on the outer peripheral part of the maximum diameter part 31'A.

On a surface of the bottom part 31'C of the plug 31' facing the elastic member 41', a recess 36 is formed so as to match the shape of the bulging part 47 of the diaphragm part 44' including the permanent magnet 45. Thus, when the diaphragm part 44' has moved to the plug 31, its surface is in surface contact with the plug 31'. In the bottom part 31'C of the plug 31' , a breather hole 32' for communicating the volume variable chamber 23 to the exterior of the cylinder hole 14 is formed. The breather hole 32' is provided in the center of the bottom part 31'C.

The plug 31' is formed of a synthetic resin. A resin material with a magnetizing material mixed therein is used to integrally form the plug 31', at the time of forming. Thus, the entirety of the plug 31' is magnetized. The plug 31' and the permanent magnet 45 fixed to the elastic member 41' are made of different magnetic poles so that they will repel each other. While the entirety of the plug 31' is magnetized in this embodiment, instead of this, the invention is not limited thereto but only a portion of the plug 31' (periphery of the breather hole 32') opposed to the permanent magnet 45 fixed to the elastic member 41' may be magnetized.

With the above arrangement, the diaphragm part 44' moves toward the plug 31' against the repulsion by a magnetic force (refer to Fig. 3B) when brake fluid flows into the hydraulic pressure chamber 22. When the diaphragm part 44' is elastically deformed toward the plug 31', the diaphragm part 44' abuts against the inner surface of the bottom part 31'C of the plug 31' and its deformation is regulated, as shown in Fig. 3B. Concretely, the diaphragm part 44' abuts against and is deformed along the inner surface of the bottom part 31'C.

Repulsion is generated between the permanent magnet 45 fixed to the elastic member 41' and the magnetized plug 31'. The repulsion force by the magnet may be used as part of a force to return the elastic member 41' to its original shape, for example, to return the diaphragm part 44' of the elastic member 41' to the original position. Thus, even in case the elastic member 41' having only a small restoring force, a proper clearance is always obtained between the plug 31' and the elastic member 41', thereby providing a wider selection range of the material of an elastic member.

In this embodiment, the permanent magnet 45 is embedded into and fixed to the bulging part 47 of the diaphragm part 44'. This disperses the repulsion applied to the permanent magnet 45 over the entirety of the diaphragm part 44' via the thickly-formed bulging part 47. It is thus possible to prevent local deformation of the elastic member 41' thus enhancing the durability.

A recess 36 is formed on the bottom part 31'C of the plug 31'. The diaphragm part 44' moves toward the plug 31' and comes into surface contact with the latter. This also prevents local deformation of the diaphragm part 44' and thus enhancing the durability.

While the embodiments of the invention have been described, the invention is not limited to the foregoing embodiments and may be implemented by a modified embodiment as required.

For example, while it is assumed that the invention is applied to a vehicular brake hydraulic pressure control device for a two-wheeler considering the storage volume of brake fluid in a volume variable chamber in the above embodiments, the invention is not limited thereto. Elastic members 41, 41' formed by a material to permit a larger volume of elastic deformation store a larger volume of brake fluid. The invention is then applicable to a vehicular brake hydraulic pressure control device for a four-wheel car.

While the breather holes 32, 32' are formed in the plugs 31, 31' to smooth the inflow of brake fluid in the above embodiment, a plug may be attached into a cylinder hole in an airtight (full sealed) fashion. With this arrangement, the air in the volume variable chamber is compressed when brake fluid flows into a hydraulic pressure chamber. It is thus possible to use the repulsion of the air as part of a force to return the diaphragm part of an elastic member to a predetermined position. Moreover, in the above embodiments, pluralities of breather holes 32, 32' are formed, it is adaptable to form only a single breather hole 32, 32'.

## Claims

1. A vehicular brake hydraulic pressure control device, comprising:
a base body (1) comprising a cylinder hole (14) having a bottomed portion and an opening;
a plug (31) disposed within the cylinder hole (14) at the opening side of the cylinder hole (14); and
an elastic member (41) disposed within the cylinder hole (14) at a position between the bottom portion of the cylinder hole (14) and the plug (31),
wherein a hydraulic pressure chamber (22), which temporally stores brake fluid when executing brake decreasing control on a wheel brake, is defined between the bottom portion of the cylinder hole (14) and the elastic member (41),
a volume variable chamber (23) is defined between the elastic member (41) and the plug (31),
the elastic member (41) partition the hydraulic pressure chamber (22) and the volume variable chamber (23) in a sealed manner, **characterised in that**
the elastic member (41) elastically deforms towards the plug (31) to allow the brake fluid to flow into the hydraulic pressure chamber (22), and the elastic member (41) restores to its original shape by means of its restoring force, to cause the brake fluid to flow out from the hydraulic pressure chamber (22).

2. The vehicular brake hydraulic pressure control device according to claim 1, wherein
the elastic member (41) and the plug (31) repel each other by a magnetic force, and
the repelling magnetic force constitutes a part of a force to return the elastic member (41) to the original shape.

3. The vehicular brake hydraulic pressure control device according to claim 1 or 2, wherein
a breather hole (32) for communicating the volume variable chamber (23) to an exterior of the cylinder hole (14) is provided in the plug (31).

## Patentansprüche

1. Hydraulische Fahrzeugbremsendrucksteuervorrichtung, umfassend:
einen Basiskörper (1) umfassend ein Zylinderloch (14), das einen Bodenabschnitt und eine Öffnung aufweist;
einen Stopfen (31), der innerhalb des Zylinderlochs (14) an der Öffnungsseite des Zylinderlochs (14) angeordnet ist; und
ein elastisches Element (41), das innerhalb des Zylinderlochs (14) an einer Position zwischen dem Bodenabschnitt des Zylinderlochs (14) und dem Stopfen angeordnet ist,
bei dem eine Hydraulikdruckkammer (22), die zweitweise ein Bremsfluid speichert, wenn eine Bremsminderungssteuerung an einer Radbremse ausgeführt wird, zwischen dem Bodenabschnitt des Zylinderlochs (14) und dem elastischen Element (41) definiert ist,
wobei eine volumenvariable Kammer (23) zwischen dem elastischen Element (41) und dem Stopfen (31) definiert ist,
wobei das elastische Element (41) die Hydraulikdruckkammer (22) und die volumenvariable Kammer (23) in einer abdichtenden Weise trennt,
**dadurch gekennzeichnet, dass**
das elastische Element (41) sich zu dem Stopfen (31) elastisch so verformt, dass es dem Bremsfluid möglich ist, in die Hydraulikdruckkammer (22) zu fließen, und das elastische Element (41) mittels seiner Wiederherstellkraft seine Ursprungsgestalt wiederherstellt, so dass das Bremsfluid dazu gebracht wird, aus der Hydraulikdruckkammer (22) herauszufließen.

2. Hydraulische Fahrzeugbremsendrucksteuervorrichtung nach Anspruch 1, bei der
das elastische Element (41) und der Stopfen (31) sich gegenseitig durch eine magnetische Kraft abstoßen, und
die abstoßende magnetische Kraft einen Teil einer Kraft darstellt, um das elastische Element (41) in seine Ursprungsgestalt zurück zu bringen.

3. Hydraulische Fahrzeugbremsendrucksteuervorrichtung nach Anspruch 1 oder 2, bei der
ein Entlüftungsloch (32) für die Kommunikation der volumenvariablen Kammer (23) mit dem äußeren des Zylinderlochs (14) in dem Stopfen (31) vorgesehen ist.

## Revendications

1. Dispositif de commande de la pression hydraulique d'un frein d'un véhicule, comprenant :
un corps de base (1) comprenant un trou cylindrique (14) ayant une partie de fond et une ouverture;
un bouchon (31) disposé dans le trou cylindrique (14) côté ouverture du trou cylindrique (14); et
un élément élastique (41) disposé dans le trou cylindrique (14) à une position entre la partie de fond du trou cylindrique (14) et le bouchon (31),
dans lequel une chambre (22) de pression hydraulique qui stocke de manière temporaire un fluide de freinage en exécutant une commande de réduction du freinage sur un frein de roue, est définie entre la partie de fond du trou cylindrique (14) et l'élément élastique (41),
une chambre à volume variable (23) est définie entre l'élément élastique (41) et le bouchon (31),
l'élément élastique (41) divise la chambre de pression hydraulique (22) et la chambre à volume variable (23) de manière étanche, **caractérisé en ce que**
l'élément élastique (41) se déforme de manière élastique en direction du bouchon (31) pour permettre au fluide de freinage de s'écouler dans la chambre de pression hydraulique (22), et l'élément élastique (41) revient à sa forme originale au moyen de sa force de restauration pour amener le fluide de freinage à quitter la chambre de pression hydraulique (22).

2. Dispositif de commande de la pression hydraulique d'un frein d'un véhicule selon la revendication 1, dans lequel
l'élément élastique (41) et le bouchon (31) se repoussent grâce à une force magnétique, et
la force magnétique de repoussement constitue une partie d'une force de rappel de l'élément élastique (41) à sa forme originale.

3. Dispositif de commande de la pression hydraulique d'un frein d'un véhicule selon la revendication 1 ou 2, dans lequel
un trou d'aération (32) pour mettre la chambre à volume variable (23) en communication avec l'extérieur du trou cylindrique (14) est prévu dans le bouchon (31).
